# EUROPÄISCHE PATENTANMELDUNG

(11) **EP 0 937 832 A2**
(43) Veröffentlichungstag der Anmeldung: **25.08.1999**
(21) Anmeldenummer: 99103275.6
(22) Anmeldetag: 19.02.1999
(51) Int. Cl.: E04B 1/26

(54) **Verbindungseinrichtung**

(30) Priorität: 20.02.1998 DE 29802951 U
(71) Anmelder: MiTek Industries GmbH, 63128 Dietzenbach (DE)
(72) Erfinder: Litze, Harald, 64823 Gross Umstadt/Wiebelsbach (DE)
(74) Vertreter: Zwirner, Gottfried, Dipl.-Ing. Dipl.-W.-Ing.

(57) **Zusammenfassung**

Verbindungseinrichtung zwischen Holzbalken, -trägern und dergleichen Hölzern, insbesondere zwischen stumpf aneinander stoßenden Hölzern, deren Längsachsen gleichlaufend in der Art von Gerberverbindern, oder quer zueinander, in der Art von Balkenschuhverbindungen oder Integralverbindungen verlaufen. Eine Metallplatte (4 ) ist zur Überspannung des Stumpfstoßes (3) zwischen angrenzenden Hölzern (1,2) auf deren Oberseite vorgesehen und enthält Gewindebohrungen (5 bis 10) zum Durchgriff von Gewindebolzen (15 bis 20), die jeweils einen Holzgewindeschaft (21) mit Spitze (24) und einen Kopfansatz (22) mit Metallgewinde aufweisen. Der Kopfansatz (22) greift mit seinem Kopfgewinde (28) in die Gewindebohrungen (5 bis 10) der Metallplatte (4) ein und weist innere Antriebsflanken (27) auf, die den Drehantrieb der Gewindebolzen ermöglichen.

## Beschreibung

Die Erfindung bezieht sich auf eine Verbindungseinrichtung zwischen Holzbalken, -trägern und dergleichen, insbesondere zwischen stumpf aneinander stoßenden Hölzern, deren Längsachsen gleichlaufend in der Art von Gerberverbindern, oder quer zueinander, in der Art von Balkenschuhverbindungen oder Integralverbindungen, verlaufen, nach dem Oberbegriff des Anspruchs 1.

Zur Verbindung von Holzbalken mit quer verlaufenden Flächen werden Balkenschuhe aus Blech verwendet, die mit Schrauben oder Nägeln an den quer verlaufenden Flächen verankert werden. Der Anblick solcher Balkenschuhe ist häufig unerwünscht. Deshalb hat man sogenannte verdeckte oder Intregalverbinder entwickelt, die jedoch schwer zu montieren sind (DE 39 14 618 A1, DE 41 24 553 A1, DE-U 88 12 680).

Eine Verbindungseinrichtung nach dem Oberbegriff des Anspruchs 1 ist aus der DE-U 89 14 213 bekannt, bei der die Metallplatte glatte Bohrungen aufweist, an welchen jeweilige zwischen Kopf und Gewindeabschnitt angeordnete Übergangsabschnitte von Schraubbolzen anliegen, die jeweils einen die Metallplatte überragenden Kopf aufweisen. Der Kopf vermag nur Kräfte in einer Richtung abzustützen.

Der Erfindung liegt die Aufgabe zugrunde, eine Verbindung zwischen Hölzern zu schaffen, die kaum sichtbar, leicht montierbar und zur Übertragung von Zug- und Druckkräften geeignet ist.

Die gestellte Aufgabe wird aufgrund der Lehre des Anspruchs 1 gelöst.

Die den Stumpfstoß überspannende Metallplatte aus hochfestem Material, insbesondere Stahl, vermag große Kräfte zwischen den zu verbindenden Hölzern zu übertragen, ist aber zufolge ihrer Anbringungsstelle auf der Oberseite der Hölzer nur von der Schmalseite sichtbar, sofern nicht ohnehin die Oberseite in einer Deckenkonstruktion verschwindet. Um die Kräfte zwischen den Hölzern auf die Stahlplatte zu übertragen, werden Gewindebohrungen in der Stahlplatte verwendet, die sowohl Zug als auch Druck übermitteln können. Zu diesen Gewindebohrungen korrespondieren Kopfansätze von Gewindebolzen, die mit innenliegenden Antriebsflanken versehen sind. Im übrigen tragen die Gewindebolzen Holzgewinde, um sich in den Hölzern zu verankern. Die hochfesten Gewindebolzen können auf dem vergleichsweise kurzen Stück ihrer Kopfansätze die auftretenden Kräfte auf die Stahlplatte übertragen, wobei man bestrebt ist, Biegespannungen in der Stahlplatte zu vermeiden. Deshalb werden Gewindebohrungen möglichst nahe des zu überbrückenden Stumpfstoßes angeordnet, wo die Momentenlinie der Balken nahezu Null ist. Bei dieser Stelle besteht jedoch die Gefahr des Ausbrechens des Holzes, vor allem wenn die Holzfasern dort stirnseitig auslaufen. Deshalb wählt man einen von 90° abweichenden Eintrittswinkel des Gewindebolzens, so daß dessen unteres Ende weiter als das obere Ende in dem Holz steckt. Ein Eintrittswinkel von 90° ± 15° ist passend, wobei 15° die Neigung gegenüber der normalen Senkrechten darstellt.

Man kann mit Vorbohren im Holz für die Gewindebolzen arbeiten; bevorzugt wird jedoch die selbstschneidende Ausbildung des Holzgewindes am Gewindebolzen, um Arbeitszeit einzusparen. In gleicher Weise wird das Schneiden von Gewinde in der Stahlplatte durch den Gewindebolzen selbst bevorzugt.

Die Erfindung wird anhand der Zeichnung beschrieben. Dabei zeigt:
- Fig. 1: eine perspektivische Ansicht zweier Hölzer im Bereich ihres Stumpfstoßes, der von der Verbindungseinrichtung überbrückt wird;
- Fig. 2: eine Anwendung als Gerber-Verbindung mit zwei Schraubreihen und
- Fig. 3: einen Schraubbolzen.

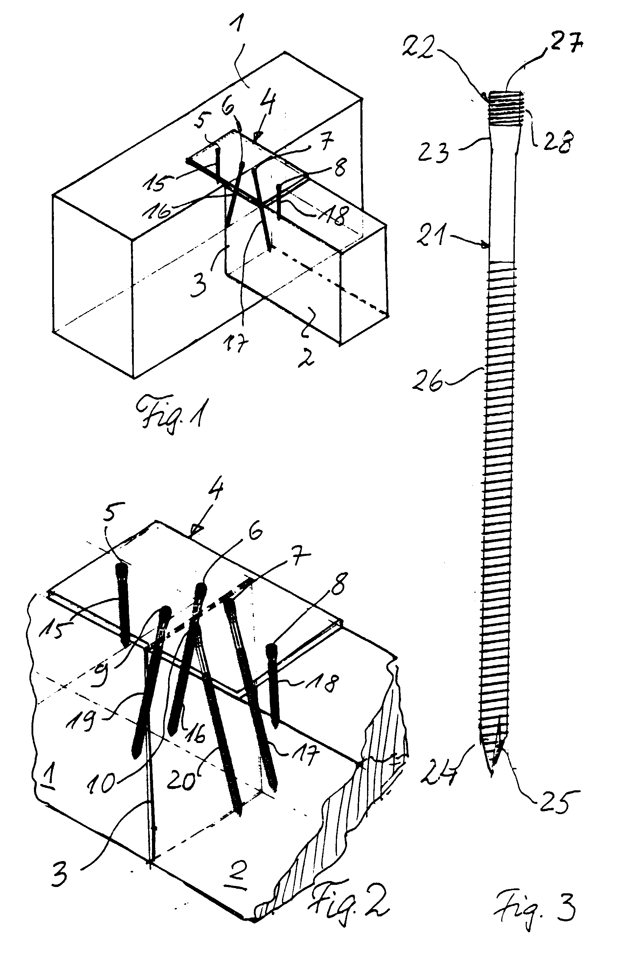

Bei der in Fig. 1 gezeigten Anwendung wird der bekannte Balkenschuh bzw. der Integralverbinder ersetzt. Quer zueinander laufende Balken 1 und 2 stoßen entlang eines Stumpfstoßes 3 aneinander, der oberseitig der Balken 1,2 von einer Stahlplatte 4 überbrückt wird. Die Stahlplatte 4 besitzt vier Bohrungen 5,6,7 und 8, die hier in einer Reihe angeordnet sind, jedoch auch einen Versatz gegeneinander aufweisen können. In jeder Bohrung ist ein Gewindebolzen 15, 16,17,18 eingeschraubt, die verschieden tief in die Hölzer 1, 2 hineinreichen. Die stumpfstoßnahen Gewindebolzen 16,17 sind etwa doppelt so lang wie die stumpfstoßfernen Gewindebolzen 15,18, und sie sind um 15° gegenüber der Senkrechten geneigt, wobei die unteren Enden auseinanderstreben.

Fig. 2 zeigt eine Gerber-Verbindung, d. h. die Verbindung von Hölzern mit gleichlaufender Längsachse. Der Stumpfstoß 3 solcher Gerber-Verbindungen wird möglichst an den Ort des Momentennullpunktes eines Durchlaufträgers gelegt. Das nicht dargestellte Auflager befindet sich z.B. links von der Stahlplatte 4. Es sind sechs Bohrungen 5 bis 10 und sechs Gewindebolzen 15 bis 20 dargestellt, wobei sich die stumpfstoßnahen Gewindebolzen paarweise gegenüberstehen.

Fig. 3 stellt einen der Gewindebolzen 16,17,19,20 dar. Er besitzt einen Schaft 21, einen Kopfansatz 22 und einen verbindenden, leicht konischen Hals 23. Das untere Ende des Schafts 21 ist als Spitze 24 mit Nut 25 ausgebildet. Der größte Teil des Schaftes ist mit Holzgewinde 26 versehen, das selbstschneidend ausgebildet ist, d. h. sich in übliches Bauholz ohne Vorbohren eingraben kann, wenn der Gewindebolzen 20 entsprechend angetrieben wird. Zu diesem Zweck weist der Kopfansatz 22 eine axiale Einbuchtung 27 mit Antriebsflanken auf, wie dies als Innensechsrund bekannt ist. Außen ist der Kopfansatz 22 mit gehärtetem Kopfgewinde 28 versehen, das zum Schneiden der Gewinde der Bohrungen 5 bis 10 geeignet ist und z. B. nicht dargestellte Schneidnuten umfaßt.

Die Stahlplatte 4 weist eine zur axialen Länge des Kopfansatze 22 passende Dicke auf, so daß der Kopfansatz 22 in der Stahlplatte 4 versenkt werden kann. Da das Gewinde in der zugehörigen Bohrung 5 bis 10 als Gegengewinde zu dem Schneidgewinde 28 erzeugt worden ist, liegt es um den Umfang herum eng an und die Kräfteübertragung erfolgt gut verteilt. Es kann zweckmäßig sein, zum Eintrieb der Gewindebolzens 15 - 20 jeweils eine Lehre zu benutzen, damit die Eintriebswinkel genau eingehalten werden.

Wie ersichtlich, sind diese Eintriebswinkel unterschiedlich für die stumpfstoßnahen und stumpfstoßfernen Bolzen gewählt. Während letztere den normalen Eintriebswinkel von 90° aufweisen, sind die stumpfstoßnahen Bolzen 6,7; 9,10 mit 90° ± 15° so eingetrieben, daß die Spitzen 24 der Bolzen voneinander wegstreben. Es versteht sich, daß die Achsen der Bohrungen 6,7,9,10 entsprechend geneigt sind.

Als Beispielsmaße des Gewindebolzens werden angegeben:
Gesamtlänge 160 mm
Metallgewindeabschnittlänge 8 mm,
Holzgewindeabschnittlänge 120 mm,
Kopfdurchmesser 9 mm,
Kerndicke am Kopfansatz 8 mm,
Schaftdicke 7,5 mm,
Kerndicke am Holzgewindeabschnitt 6 mm,
Ganghöhe des Metallgewindes 1 mm,
Ganghöhe des Holzgewindes 2 mm,
Flankenwinkel des Metallgewindes 55°,
Flankenwinkel des Holzgewindes 30°.

Es versteht sich, daß von diesen Maßen in weiten Bereichen abgewichen werden kann, um sich den Dickenabmessungen der zu verbindenden Hölzer anzupassen.

Anstelle der Verwendung von Schneidgewinde 28 und glatten Bohrungen 5 bis 10 können auch vorgefertigte Gewindebohrungen 5 bis 10 in Zusammenwirken mit üblichen Maschinengewinden der Bolzen 15 bis 20 verwendet werden.

## Patentansprüche

1. Verbindungseinrichtung zwischen Holzbalken, -trägern und dergleichen Hölzern, insbesondere zwischen stumpf aneinander stoßenden Hölzern, deren Längsachsen gleichlaufend in der Art von Gerberverbindern, oder quer zueinander, in der Art von Balkenschuhverbindungen oder Integralverbindungen, verlaufen, mit folgenden Merkmalen:
eine Metallplatte (4) zur Überspannung des Stumpfstoßes (3) zwischen angrenzenden Hölzern (1,2) auf deren Oberseite;
die Metallplatte (4) enthält Durchgangsbohrungen zum Durchgriff von Gewindebolzen;
eine Anzahl von Gewindebolzen (15 bis 20), die jeweils einen Schaft (21) mit Spitze (24) am unteren Ende und einen Kopfansatz (22) am oberen Ende aufweisen, wobei der Schaft (21) mit Holzgewinde (26) versehen ist;
gekennzeichnet durch folgende Maßnahmen:
die Durchgangsbohrungen sind spätestens im fertig montierten Zustand als Gewindebohrungen (5 bis 10) ausgebildet, von denen mindestens zwei (6,7) nahe des Stumpfstoßes (3) angeordnet sind, und zwar je eine Gewindebohrung auf jeder Seite des Stumpfstoßes;
der Kopfansatz (22) ist außen mit Kopfgewinde (28) versehen, das in die Gewindebohrungen (5 bis 10) der Metallplatte (4) eingreift;
der Kopfansatz (22) weist innere Antriebsflanken (27) auf, die den Drehantrieb der Gewindebolzen ermöglichen.

2. Verbindungseinrichtung nach Anspruch 1,
dadurch gekennzeichnet, daß das Kopfgewinde (28) als Schneidgewinde für Metall ausgebildet ist.

3. Verbindungseinrichtung nach Anspruch 1 oder 2,
dadurch gekennzeichnet, daß die Achsen der stumpfstoßnahen Gewindebohrungen (6,7; 9,10) von Stumpfstoß (3) wegweisend geneigt sind.

4. Verbindungseinrichtung nach Anspruch 3,
dadurch gekennzeichnet, daß der Neigungswinkel 10° bis 20° beträgt.

5. Verbindungseinrichtung nach Anspruch 3 oder 4,
dadurch gekennzeichnet, daß das Holzgewinde (26) selbstschneidend ausgebildet ist und/oder die Schaftspitze (24) mit wenigstens einer Schneidnut (25) versehen ist.

6. Verbindungseinrichtung nach einem der Ansprüche 1 bis 5,
dadurch gekennzeichnet, daß das Kopfgewinde (28) ein zylindrisches Gewinde mit Ganghöhe und -tiefe von etwa 1 mm bei einem Kopfdurchmesser von etwa 9 mm ist.

7. Verbindungseinrichtung nach Anspruch 6,
dadurch gekennzeichnet, daß das Kopfgewinde (28) einen Flankenwinkel von etwa 55° aufweist.

8. Verbindungseinrichtung nach einem der Ansprüche 1 bis 7,
dadurch gekennzeichnet, daß das Holzgewinde (26) eine Ganghöhe von etwa 2 mm und eine Gangtiefe von etwa 1,5 mm bei einem Schaftdurchmesser von etwa 7,5 mm aufweist.

9. Verbindungseinrichtung nach Anspruch 8,
dadurch gekennzeichnet, daß das Holzgewinde (26) einen Flankenwinkel von etwa 30° aufweist.

10. Verbindungseinrichtung nach einem der Ansprüche 1 bis 9,
dadurch gekennzeichnet, daß die axiale Länge des Kopfgewindes (28) im Bereich von 6 bis 10 mm liegt.

11. Verbindungseinrichtung nach einem der Ansprüche 1 bis 10, dadurch gekennzeichnet, daß die Gesamtlänge des stumpfstoßnahen Gewindebolzens (20) im Bereich von 100 bis 200 mm liegt, während der stumpfstoßferne Gewindebolzen etwa halbe Länge zu den stumpfstoßnahen Gewindebolzen aufweist.
